# EUROPEAN PATENT APPLICATION

(11) **EP 3 881 957 A1**
(43) Date of publication of application: **22.09.2021**
(21) Application number: 19919957.1
(22) Date of filing: 18.11.2019
(51) Int. Cl.: B22F 3/105, B22F 3/16, B23K 15/00, B23K 26/00, B23K 26/21, B23K 26/34, B33Y 10/00, B33Y 30/00, B33Y 50/02, B29C 64/141, B29C 64/209, B29C 64/268, B29C 64/393

(54) **THREE-DIMENSIONAL LAMINATION DEVICE AND THREE-DIMENSIONAL LAMINATION METHOD**

(30) Priority: 19.03.2019 JP 2019051149
(71) Applicant: Mitsubishi Heavy Industries Machine Tool Co., Ltd., Ritto-shi, Shiga 520-3080 (JP)
(72) Inventor: HIRONO, Yoko, Ritto-shi, Shiga 520-3080 (JP); YAMAMOTO, Yusuke, Ritto-shi, Shiga 520-3080 (JP)
(74) Representative: Studio Torta S.p.A.
(86) International application number: PCT/JP2019/045062
(87) International publication number: WO 2020/188881

(57) **Abstract**

A deposited body is appropriately formed. A three-dimensional deposition device 1 includes a deposition head 18 that is provided with a powder jetting port 44B that jets powder and a light beam irradiation port 42B that emits a light beam and forms a deposited body A by the powder being melted and solidified, a shape measurement unit 26 that measures a shape of the deposited body A, a deposited body cooling unit 30 that cools the deposited body A, and a control unit. The control unit includes a measurement control unit that causes the shape measurement unit 26 to measure the shape of the deposited body A, a cooling determination unit that determines whether to cool the deposited body A based on the shape of the deposited body A measured by the shape measurement unit, and a cooling control unit that causes the deposited body cooling unit 30 to cool the deposited body A in a case in which the cooling determination unit determines to cool the deposited body A.

## Description

### Field

The present invention relates to a three-dimensional deposition device and a three-dimensional deposition method.

### BACKGROUND

In recent years, a deposited body forming method for forming a deposited body using powder such as metal powder as a raw material has been put into practical use. For example, it is described in Patent Literature 1 that a deposition-type three-dimensional deposition device producing a deposited body by jetting powder while a deposition head emits a light beam.

### Citation List

### Patent Literature

Patent Literature 1: Japanese Patent Application Laid-open No. 2015-196264

### Summary

### Technical Problem

Because a three-dimensional deposition device melts powder and performs deposition, what is called heat sagging may occur by an increase in the temperature of the deposited body, and the height of the deposited body may be lower than expected. Thus, in order to suppress heat sagging, the deposited body may be cooled during a deposition step. However, in a case in which the timing of cooling the deposited body is inappropriate, the deposited body may not be appropriately formed. For example, in a case in which the timing of cooling the deposited body is late, an influence of heat sagging increases, so that dimensional accuracy of the deposited body deteriorates. In a case in which the timing of cooling the deposited body is too early, the producing time of the deposited body gets longer. Therefore, it is required to appropriately set the timing of cooling the deposited body and appropriately form the deposited body.

The present invention is made to solve the above-described problems, and an object of the present invention is to provide a three-dimensional deposition device capable of appropriately forming a deposited body and a three-dimensional deposition method.

### Solution to Problem

In order to solve the above-described problems and achieve the object, a three-dimensional deposition device according to the present disclosure includes a deposition head provided with a powder jetting port from which powder is jetted and a light beam irradiation port from which a light beam is emitted to form a deposited body by the powder being melted and solidified; a shape measurement unit that measures a shape of the deposited body; a deposited body cooling unit that cools the deposited body; and a control unit. The control unit includes a measurement control unit that causes the shape measurement unit to measure the shape of the deposited body, a cooling determination unit that determines whether to cool the deposited body based on the shape of the deposited body measured by the shape measurement unit, and a cooling control unit that causes the deposited body cooling unit to cool the deposited body in a case in which the cooling determination unit determines to cool the deposited body.

Since this three-dimensional deposition device determines whether to cool the deposited body based on the shape of the deposited body, a timing of cooling the deposited body can be appropriately set, and the deposited body can be appropriately formed.

It is preferable that the shape measurement unit measures a height of the deposited body as the shape of the deposited body. Since this three-dimensional deposition device determines whether to cool the deposited body based on the height of the deposited body, the timing of cooling the deposited body can be appropriately set, and the deposited body can be appropriately formed.

It is preferable that the cooling determination unit determines to cool the deposited body in a case in which a difference between the height of the deposited body measured by the shape measurement unit and a preset reference height is equal to or greater than a predetermined value. Since this three-dimensional deposition device determines to cool the deposited body in a case in which a difference between the height of the deposited body and a reference height is equal to or greater than a predetermined value, the timing of cooling the deposited body can be determined appropriately in consideration of an influence of heat sagging.

It is preferable that the measurement control unit causes the shape measurement unit to measure the height of the deposited body in a case in which the number of times of deposition performed by the deposition head reaches the predetermined reference number of times of deposition, and the cooling determination unit determines whether to cool the deposited body. According to this three-dimensional deposition device, the timing of cooling the deposited body can be appropriately determined.

It is preferable that the measurement control unit causes the shape measurement unit to measure the height of the deposited body along a width direction of beads formed by the deposition head to detect a maximum height position that is a position where the height of the deposited body is maximum in the width direction of the beads, and causes the shape measurement unit to measure heights of the deposited body along a longitudinal direction of the beads from the maximum height position. According to this three-dimensional deposition device, the timing of cooling the deposited body can be appropriately determined.

It is preferable that the cooling determination unit determines whether to cool the deposited body based on a maximum height or an average height among measurement results of the heights of the deposited body, which are measured along the longitudinal direction of the bead from the maximum height position by the shape measurement unit. According to this three-dimensional deposition device, the timing of cooling the deposited body can be appropriately determined.

It is preferable that the control unit further includes a forming control unit that controls forming of the deposited body, and the forming control unit causes the deposition head to stop forming during a period when the cooling control unit cools the deposited body by the deposited body cooling unit. According to this three-dimensional deposition device, since forming of the deposited body is stopped and the deposited body is cooled, the deposited body can be appropriately cooled.

It is preferable that a temperature measurement unit that measures a temperature of the deposited body is further included, and the cooling control unit causes the deposited body cooling unit to end cooling of the deposited body in a case in which the temperature of the deposited body measured by the temperature measurement unit is equal to or lower than a predetermined reference temperature. According to this three-dimensional deposition device, since cooling is stopped according to the temperature of the deposited body, the forming of the deposited body can be restarted at an appropriate timing, and the deposited body can be appropriately formed.

It is preferable that a base cooling unit that supplies cooling water to a base unit on which the deposited body is formed is further included, the deposited body cooling unit jets cooling gas to the deposited body, the cooling control unit causes the base cooling unit to supply the cooling water and causes the deposited body cooling unit not to jet the cooling gas during forming by the deposition head, and in a case in which the cooling determination unit determines to cool the deposited body, the cooling control unit causes the deposited body cooling unit to jet the cooling gas while continuing to supply the cooling water by the base cooling unit. According to a three-dimensional deposition device 1, a deposited body A can be appropriately cooled, and the deposited body A can be appropriately formed.

In order to solve the above-described problems and achieve the object, a three-dimensional deposition method according to the present disclosure is performed by a three-dimensional deposition device including a deposition head provided with a powder jetting port from which powder is jetted and a light beam irradiation port from which a light beam is emitted to form a deposited body by the powder being melted and solidified. The three-dimensional deposition method includes a shape measurement step of measuring a shape of the deposited body; a cooling determination step of determining whether to cool the deposited body based on the shape of the deposited body measured at the shape measurement step; and a cooling step of cooling the deposited body in a case of determining to cool the deposited body at the cooling determination step. According to the three-dimensional deposition method, since whether to cool a deposited body is determined based on the shape of the deposited body, a timing of cooling the deposited body can be appropriately set, and the deposited body can be appropriately formed.

### Advantageous Effects of Invention

According to the present invention, the deposited body can be appropriately formed.

### Brief Description of Drawings

FIG. 1 is a schematic diagram of a three-dimensional deposition device according to the present embodiment.
FIG. 2 is a schematic diagram of a deposition head according to the present embodiment.
FIG. 3 is a schematic diagram illustrating shape measurement by a shape measurement unit according to the present embodiment.
FIG. 4 is a schematic diagram illustrating heat sagging of a deposited body.
FIG. 5 is a block diagram of a control device according to the present embodiment.
FIG. 6 is a schematic diagram illustrating the number of times of deposition.
FIG. 7 is a diagram illustrating an example of a method for measuring the height of the deposited body.
FIG. 8 is a diagram illustrating an example of the method for measuring the height of the deposited body.
FIG. 9 is a flowchart illustrating a step of depositing the deposited body according to the present embodiment.

### Description of Embodiments

Hereinafter, a preferred embodiment of the present invention will be described in detail with reference to the accompanying drawings. The present invention is not limited to this embodiment, and in a case in which there are a plurality of embodiments, the present invention also includes configurations in which the embodiments are combined with each other.

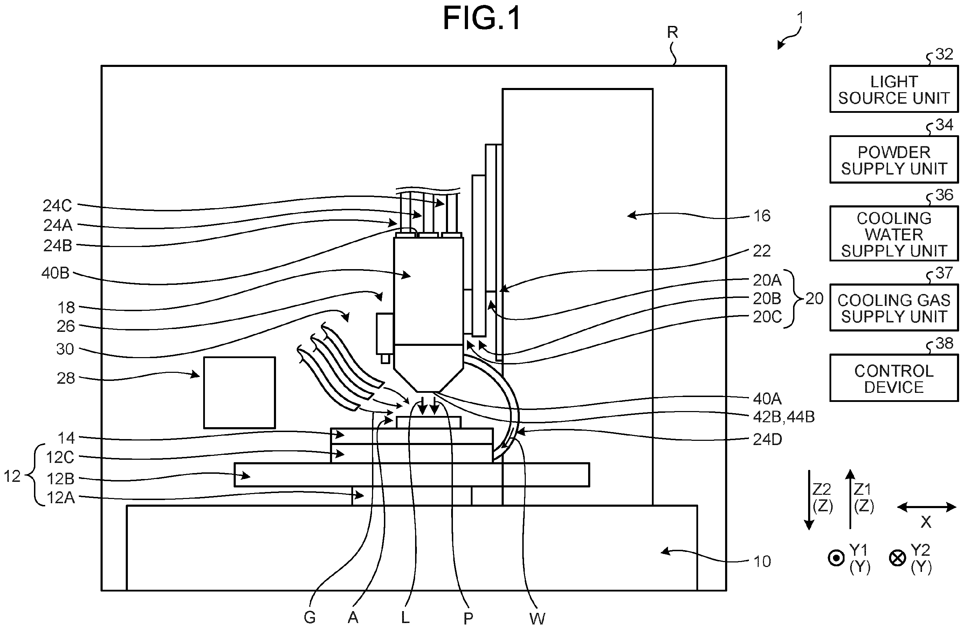

FIG. 1 is a schematic diagram of a three-dimensional deposition device according to the present embodiment. Here, in the present embodiment, one direction in a horizontal plane is referred to as a direction X, a direction orthogonal to the direction X in the horizontal plane is referred to as a direction Y, and a direction orthogonal to each of the direction X and the direction Y, that is, a vertical direction is referred to as a direction Z. In addition, one direction along the direction Y is referred to as a direction Y1, and the other direction along the direction Y, that is, a direction opposite to the direction Y1 is referred to as a direction Y2. In the present embodiment, the direction Y2 side of a three-dimensional deposition device 1 is the front side of the three-dimensional deposition device 1, and the direction Y1 side of the three-dimensional deposition device 1 is the back side of the three-dimensional deposition device 1.
The front side of the three-dimensional deposition device 1 is, for example, a side where an operator operates the three-dimensional deposition device 1 in order to perform forming of a deposited body. In addition, one direction along the direction Z is referred to as a direction Z1, and the other direction along the direction Z, that is, a direction opposite to the direction Z1 is referred to as a direction Z2. In the present embodiment, the direction Z1 is an upward direction in the vertical direction, and the direction Z2 is a downward direction in the vertical direction. FIG. 1 is a schematic diagram of the three-dimensional deposition device 1 according to the present embodiment, as viewed from the direction Y.

As illustrated in FIG. 1, the three-dimensional deposition device 1 is provided with a board unit 10, a base movement unit 12, a base unit 14, a board unit 16, a deposition head 18, a rotation mechanism 20, a head movement unit 22, tubes 24A, 24B, and 24C, a base cooling unit 24D, a shape measurement unit 26, a temperature measurement unit 28, and a deposited body cooling unit 30, which are included in a three-dimensional deposition chamber R. The three-dimensional deposition device 1 is also provided with a light source unit 32, a powder supply unit 34, a cooling water supply unit 36, a cooling gas supply unit 37, and a control device 38. In the present embodiment, the light source unit 32, the powder supply unit 34, the cooling water supply unit 36, the cooling gas supply unit 37, and the control device 38 are provided outside the three-dimensional deposition chamber R.

The three-dimensional deposition device 1 is a device forming a deposited body A that is a three-dimensional object on the base unit 14. The base unit 14 is a member that serves as a base on which the deposited body A is formed. The base unit 14 of the present embodiment is a plate-shaped member. The base unit 14 is not limited thereto. The base unit 14 is a member that serves as a base of the deposited body A as a separate body from the deposited body A, but may be a member that is combined with the deposited body A to be a part of the deposited body A.

The board unit 10 is a board that supports the base movement unit 12, the base unit 14, and the like. The base movement unit 12 is provided on the board unit 10 and supports the base unit 14. The base movement unit 12 is a mechanism controlled by the control device 38 to move the base unit 14. The base movement unit 12 includes a first movement unit 12A, a second movement unit 12B, and a rotation unit 12C. The first movement unit 12A is a mechanism that moves the base unit 14 in a first direction along the horizontal direction (orthogonal to the vertical direction). In the present embodiment, the first movement unit 12A moves the base unit 14 along the direction Y. Furthermore, in the present embodiment, the second movement unit 12B, the rotation unit 12C, and the base unit 14 are disposed on the first movement unit 12A, and the first movement unit 12A moves the second movement unit 12B, the rotation unit 12C, and the base unit 14 along the direction Y.

The second movement unit 12B is a mechanism that moves the base unit 14 in a second direction along the horizontal direction (orthogonal to the vertical direction), and the second direction is a direction orthogonal to the first direction. In the present embodiment, the second movement unit 12B moves the base unit 14 along the direction X. Furthermore, in the present embodiment, the rotation unit 12C and the base unit 14 are disposed on the second movement unit 12B, and the second movement unit 12B moves the rotation unit 12C and the base unit 14 along the direction X. In the present embodiment, the first movement unit 12A and the second movement unit 12B are sliders moving the base unit 14 that is mounted on the upper side thereof, but may be mechanisms other than the sliders.

The rotation unit 12C is a rotation table on which the base unit 14 is disposed. The rotation unit 12C rotates around at least one rotation axis to rotate the base unit 14 disposed on the upper side thereof. In the present embodiment, the rotation unit 12C rotates the base unit 14 around three rotation axes orthogonal to one another.

In this way, the base movement unit 12 moves the base unit 14 along the direction X and the direction Y using the first movement unit 12A and the second movement unit 12B. Furthermore, the base movement unit 12 rotates the base unit 14 around the three rotation axes using the rotation unit 12C. That is, the base movement unit 12 is a five-axis moving mechanism that moves the base unit 14 along two axes and rotates the base unit 14 around three rotation axes. However, the base movement unit 12 is not limited to the five-axis moving mechanism, and may be, for example, a two-axis moving mechanism that moves the base unit 14 along the direction X and the direction Y.

The board unit 16 is a board that is provided in the three-dimensional deposition chamber R, and in the present embodiment, the head movement unit 22 is provided thereon.

The deposition head 18 is provided on the direction Z1 side of the base unit 14, that is, the upper side of the base unit 14 in the vertical direction. The deposition head 18 irradiates the base unit 14 with a light beam L from a light beam irradiation port 42B and jets a powder P toward the base unit 14 from a powder jetting port 44B to form the deposited body on the base unit 14. That is, the three-dimensional deposition device 1 according to the present embodiment is a deposition-type three-dimensional deposition device provided with the deposition head 18.

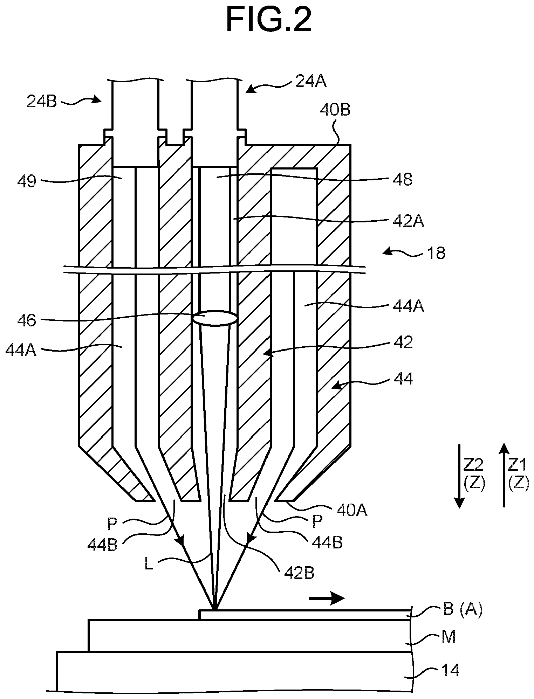

FIG. 2 is a schematic diagram of the deposition head according to the present embodiment. As illustrated in FIG. 2, the deposition head 18 includes an inner tube 42 and an outer tube 44. The outer tube 44 is a tubular member, and the diameter thereof decreases toward a front end, that is, the direction Z2. The inner tube 42 is also a tubular member, and the diameter thereof decreases toward a front end, that is, the direction Z2. Because the inner tube 42 is inserted into the outer tube 44, the inner tube 42 and the outer tube 44 form a double tube. The deposition head 18 includes a space on an inner peripheral surface side of the inner tube 42 that serves as a beam path 42A through which the light beam L passes. The deposition head 18 includes a space between an outer peripheral surface of the inner tube 42 and an inner peripheral surface of the outer tube 44 that serves as a powder flow path 44A through which the powder P passes. That is, the powder flow path 44A is a flow path having a shape of surrounding the beam path 42A. In the present embodiment, the powder flow path 44A is concentrically disposed on an outer periphery of the beam path 42A.

The deposition head 18 includes the light beam irradiation port 42B opening at an end 40A on the direction Z2 side. The deposition head 18 is provided with a fiber connection port 48 at an end 40B on the direction Z1 side, that is, an end on the opposite side to the end 40A. The fiber connection port 48 is an opening provided at the end 40B. The light beam irradiation port 42B and the fiber connection port 48 communicate with each other through the beam path 42A. That is, the light beam irradiation port 42B is an opening of the beam path 42A on the direction Z2 side, and the fiber connection port 48 is an opening of the beam path 42A on the direction Z1 side. The deposition head 18 is provided with an optical element 46 at a position between the light beam irradiation port 42B and the fiber connection port 48 of the beam path 42A. The optical element 46 is provided with, for example, a collimating lens that collimates the light beam L and a condensing lens that condenses the collimated light beam L. However, the configuration of the optical element 46 is not limited thereto, and is optional.

The tube 24A that is a fiber is connected to the fiber connection port 48. The tube 24A is a fiber connected to the light source unit 32 that is a light source of the light beam L, and an end thereof is connected to the fiber connection port 48. The tube 24A receives the light beam L incident from the light source unit 32, guides the incident light beam L to the end connected to the fiber connection port 48, and emits the light beam L from the end into the beam path 42A of the deposition head 18. The light beam L emitted into the beam path 42A travels in the beam path 42A toward the direction Z2, passes through the optical element 46, and is emitted from the light beam irradiation port 42B to the outside of the deposition head 18. The light beam L emitted from the light beam irradiation port 42B travels toward the direction Z2, and is emitted toward the base unit 14.

The deposition head 18 includes the powder jetting port 44B opening at the end 40A on the direction Z2 side. The powder jetting port 44B opens to surround the light beam irradiation port 42B. Furthermore, the deposition head 18 is provided with a tube connection port 49 at the end 40B on the direction Z1 side. The tube connection port 49 is an opening provided at the end 40B. The powder jetting port 44B and the tube connection port 49 communicate with each other through the powder flow path 44A. That is, the powder jetting port 44B is an opening of the powder flow path 44A on the direction Z2 side, and the tube connection port 49 is an opening of the powder flow path 44A on the direction Z1 side.

The tube 24B is connected to the tube connection port 49. The tube 24B is a tube connected to the powder supply unit 34 that is a tank storing the powder P, and an end thereof is connected to the tube connection port 49. The tube 24B guides the powder P from the powder supply unit 34 to the end connected to the tube connection port 49, so that the powder P is supplied from the end into the powder flow path 44A of the deposition head 18. The powder P supplied into the powder flow path 44A flows in the powder flow path 44A toward the direction Z2, and is jetted from the powder jetting port 44B to the outside of the deposition head 18. The powder P jetted from the powder jetting port 44B travels toward the direction Z2 and is jetted toward the base unit 14.

Here, the base unit 14 is irradiated with the light beam L with a predetermined spot diameter. In an example of FIG. 2, a base material M on the base unit 14 is irradiated with the light beam L such that the spot diameter, that is, a convergence position of the light beam overlaps. The base material M is a member that serves as a base material of the deposited body, but may be a deposited body that is being formed by the three-dimensional deposition device 1. The base material M is melted by the light beam L to form a molten pool in which the base material M is melted. The powder P is jetted toward the base unit 14 with a predetermined convergence diameter.
The powder P is jetted toward the molten pool, that is, the powder P is jetted such that the convergence position overlaps with the molten pool. Therefore, the powder P jetted from the powder jetting port 44B is melted in the molten pool. Since the base unit 14 moves with respect to the deposition head 18, a position at which the light beam L is radiated changes. Therefore, because the position having been irradiated with the light beam L and having formed the molten pool is no longer irradiated with the light beam L, the position is cooled and solidified to form a bead B. The beads B are deposited in a three-dimensional manner to form the deposited body A.

The light beam L in the present embodiment is laser light, but is not limited to the laser light, and may be, for example, an electron beam. The powder P in the present embodiment is metal powder, but is not limited to the metal powder as long as the powder P is powder.

In the example of FIG. 2, the tube 24A configured to transmit the light beam L and the tube 24B configured to supply the powder P are connected to the deposition head 18, but as illustrated in FIG. 1, a tube 24C is also connected to the deposition head 18. The tube 24C is a tube connected to the cooling water supply unit 36 that is a chiller circulating a cooling water W, and an end thereof is connected to the deposition head 18. The tube 24C guides the cooling water W from the cooling water supply unit 36 to the end, and supplies the cooling water W from the end into the deposition head 18. The cooling water W supplied into the deposition head 18 flows through a flow path in the deposition head 18, which is provided for the cooling water W, and cools the deposition head 18. The base cooling unit 24D is connected to the flow path provided for the cooling water W. The base cooling unit 24D is a tube whose one end is connected to the flow path of the deposition head 18, which is provided for the cooling water W, and the cooling water W flowing through the flow path in the deposition head 18 is supplied from one end. The other end of the base cooling unit 24D is connected to the base unit 14. The other end of the base cooling unit 24D is connected to a flow path in the base unit 14, which is provided for the cooling water W. The cooling water W supplied from the deposition head 18 to the base cooling unit 24D flows into the flow path in the base unit 14 from the other end of the base cooling unit 24D, and cools the base unit 14. The cooling water W supplied into the base unit 14 returns to the cooling water supply unit 36 through a pipe (not illustrated), circulates, and cools the deposition head 18 and the base unit 14 again.

Since the deposited body A is deposited on the base unit 14, the deposited body A is indirectly cooled through the base unit 14 by the cooling water W supplied from the base cooling unit 24D into the base unit 14. The cooling water W supplied from the base cooling unit 24D to the base unit 14 is the cooling water after passing through the deposition head 18, but the base cooling unit 24D may supply the cooling water W that does not pass through the deposition head 18 to the base unit 14. The cooling water W is water in the present embodiment, but is not limited to water as long as the cooling water W is a refrigerant capable of cooling the base unit 14 and the like.

In addition, a tube configured to supply gas to the deposition head 18 may be connected to the deposition head 18. Examples of the gas supplied by the tube connected to the deposition head 18 include a carrier gas supplied to the powder flow path 44A configured to flow the powder P, an inert gas supplied so as to cover the outer periphery of the position where the powder P and the light beam L are supplied.

Returning to FIG. 1, the rotation mechanism 20 is a mechanism that is connected to the deposition head 18 and rotates the deposition head 18 around a rotation axis intersecting the direction Z. The rotation mechanism 20 includes a first plate unit 20A, a second plate unit 20B, and a connection unit 20C. The first plate unit 20A is attached to the board unit 16 through the head movement unit 22. A surface of the second plate unit 20B is rotatably attached to a surface of the first plate unit 20A. The connection unit 20C is a member that connects the second plate unit 20B and the deposition head 18. The connection unit 20C connects, for example, a back surface of the second plate unit 20B and a side surface of the deposition head 18 (here, the surface on the direction X side). The connection unit 20C connects the second plate unit 20B and the deposition head 18 such that relative positions of the second plate unit 20B and the deposition head 18 are fixed with each other. That is, the position of the deposition head 18 is fixed with respect to the second plate unit 20B. Therefore, the deposition head 18 rotates together with the second plate unit 20B with respect to the first plate unit 20A, that is, the board unit 16 around a rotation axis intersecting the direction Z, here, an axis along the direction X as a rotation axis. However, the rotation mechanism 20 is not an indispensable configuration, and the deposition head 18 may not be rotatable.

The head movement unit 22 moves the deposition head 18 along the direction Z. In the present embodiment, the head movement unit 22 is attached to the board unit 16. The head movement unit 22 moves the rotation mechanism 20 and the deposition head 18 that is connected to the rotation mechanism 20 along the direction Z. In the present embodiment, the head movement unit 22 is a slider that moves the rotation mechanism 20 and the deposition head 18, but may be a mechanism other than the slider. The head movement unit 22 is not limited to a unit that is attached to the board unit 16, and an attaching position is optional. For example, in a case in which the rotation mechanism 20 is not provided, the head movement unit 22 may be directly connected to the deposition head 18.

The shape measurement unit 26 is a sensor that measures the shape of the deposited body A. As illustrated in FIG. 1, the shape measurement unit 26 is provided closer to the direction Z1 side than the base unit 14 is. Furthermore, the shape measurement unit 26 is attached to the deposition head 18. Here, the shape measurement unit 26 is attached to a side surface of the deposition head 18 (here, a surface on the direction X side). However, the shape measurement unit 26 is not limited to being attached to the deposition head 18, and a position where the shape measurement unit 26 is provided is optional.

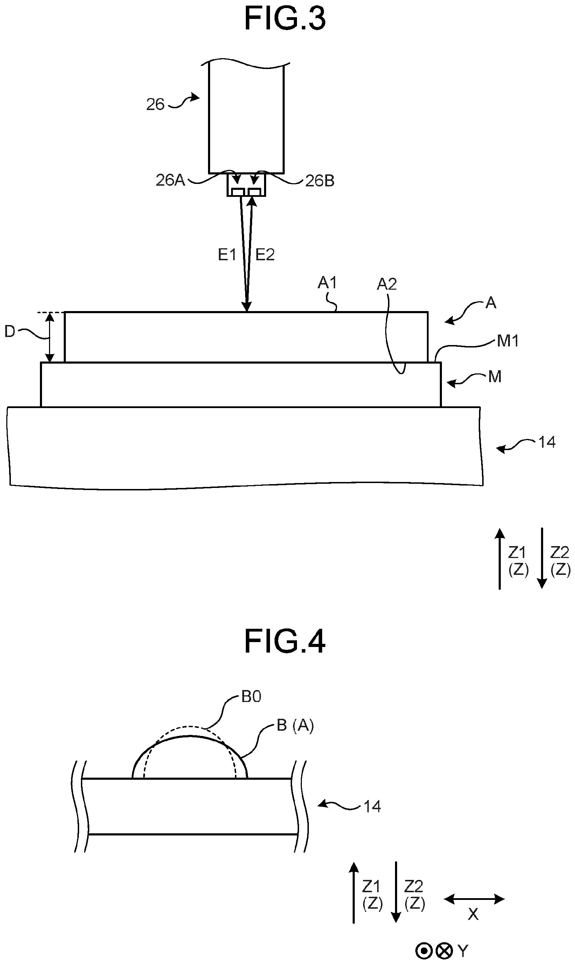

FIG. 3 is a schematic diagram illustrating shape measurement by the shape measurement unit according to the present embodiment. In the present embodiment, the shape measurement unit 26 measures the height of the deposited body A. The height of the deposited body A refers to the length (thickness) of the deposited body A along the direction Z. Furthermore, as illustrated in FIG. 3, the height D of the deposited body A is the length in the direction Z between a surface A1 of the deposited body A on the direction Z1 side and a surface A2 of the deposited body A on the direction Z2 side. The deposited body A is irradiated with light, and then the shape measurement unit 26 measures the height D of the deposited body A by receiving the reflected light. As illustrated in FIG. 3, the shape measurement unit 26 irradiates the surface A1 of the deposited body A with measurement light E1 from an emitting unit 26A. The measurement light E1 is, for example, laser light. The measurement light E1 is reflected by the surface A1 of the deposited body A, and is received as a reflected light E2 by a light receiving unit 26B of the shape measurement unit 26. In a case in which a distance from the light receiving unit 26B to the deposited body A changes, an image-formation position of an image of the reflected light E2, which is formed on the light receiving unit 26B, changes. Therefore, the amount of change in this position can be converted to a distance to the surface A1 of the deposited body A. For example, before forming of the deposited body A, a distance to a surface M1 of the base material M (or a surface of the base unit 14) is measured in advance, and a difference between the distance to the surface A1 of the deposited body A and the distance to the surface M1 of the base material M (or the surface of the base unit 14) is calculated, so that the height D of the deposited body A can be measured. However, a method for measuring the height D of the deposited body A is not limited to the method of receiving the reflected light E2 of the measurement light E1 in this way, and is optional. For example, the shape measurement unit 26 may image the surface A1 of the deposited body A (that is, the shape measurement unit 26 receives the reflected light of visible light) and measure the height D of the deposited body A based on the imaged image.

Returning to FIG. 1, the temperature measurement unit 28 is a sensor that measures the temperature of the deposited body A. The temperature measurement unit 28 is provided on a cover of the three-dimensional deposition chamber R in the direction Y2 (front side), and furthermore, is provided on a surface of the cover on the direction Y1 side, that is, a surface inside the three-dimensional deposition chamber R. However, the position where the temperature measurement unit 28 is provided is optional. The temperature measurement unit 28 is a noncontact type temperature sensor, and a detection element is provided to face the deposited body A on the base unit 14. The temperature measurement unit 28 measures the temperature by, for example, detecting the amount of infrared rays from the deposited body A and converting the amount of infrared rays into temperatures. For example, the temperature measurement unit 28 may be a thermography that acquires images showing temperature distribution for each position of the deposited body A. However, the method for measuring the temperature of the deposited body A is not limited to such detection of the amount of infrared rays, and any method may be employed.

The deposited body cooling unit 30 is a mechanism configured to cool the deposited body A. The deposited body cooling unit 30 is a tube connected to the cooling gas supply unit 37 such as a pump configured to supply a cooling gas G. The deposited body cooling unit 30 jets the cooling gas G that is supplied from the cooling gas supply unit 37, from the opening 30A at an end thereof. Because the opening 30A of the deposited body cooling unit 30 is provided to face the deposited body A, the cooling gas G jetted from the opening 30A is sprayed on the deposited body A. The deposited body A is cooled by the cooling gas G. The deposited body cooling unit 30 directly cools the deposited body A by jetting the cooling gas G to the deposited body A in this way. In the present embodiment, a plurality (three in this case) of the deposited body cooling units 30 are provided, but the number of the deposited body cooling units 30 provided is optional. Because the deposited body cooling unit 30 is formed of a member that can be deformed such as by bending, the position of the opening 30A with respect to the deposited body A can be changed by deforming the deposited body cooling unit 30. However, the deposited body cooling unit 30 is not limited to the configuration described above as long as the deposited body cooling unit 30 is a mechanism that cools the deposited body A. The cooling gas G is air in the present embodiment, but the type of gas is not limited thereto, and any gas may be employed. For example, an inert gas such as nitrogen or argon may be employed.

FIG. 4 is a schematic diagram illustrating heat sagging of the deposited body. The three-dimensional deposition device 1 forms the bead B by melting and solidifying the powder P, and forms the deposited body A by depositing the bead B. That is, since the bead B is produced by the molten powder P being solidified, the temperature of the bead B is high until the bead B is sufficiently cooled. Therefore, what is called heat sagging occurs on the bead B, and the height of the bead B may be lower than expected. In an example of FIG. 4, the shape of the bead in a case in which heat sagging is not taken into consideration is illustrated by a broken line as bead B0, and the shape of the bead in a case in which heat sagging occurs is illustrated by a solid line as bead B. The bead B0 refers to, for example, the shape of the bead B expected in the design. In the example of FIG. 4, an example in which the bead B is formed while the base unit 14 is moved along the direction Y is illustrated. That is, in the example of FIG. 4, it can be said that the direction Y of the deposition head 18 is a scanning direction and is a longitudinal direction of the bead B. Furthermore, it can be said that the direction X intersecting the direction Y is a width direction of the bead B. As illustrated in FIG. 4, the bead B has a shorter height than the bead B0 does, that is, a length along the direction Z is shorter than that of the bead B0, and has a longer width than the bead B0 does, that is, a length along the direction X is longer than that of the bead B0, due to heat sagging. As described above, because the shape of the bead B is different from an expected shape of the bead B0, the shape of the deposited body A formed of the bead B is different from an expected shape, and dimensional accuracy of the deposited body A may deteriorate. That is, in the three-dimensional deposition device 1, a positional relation between the deposition head 18 and the deposited body A is set in consideration of conditions such as a focal position of the light beam L, a convergence position of the powder P, and the like, and specifically, after depositing one layer, the deposition head 18 is moved toward the Z direction by a certain distance. Therefore, in a case in which the shape of the bead B is different from the expected shape, the positional relation between the deposition head 18 and the deposited body A is inappropriate when the next layer is deposited. Thus, there is a possibility that the deposition cannot be performed appropriately. As a result, the dimensional accuracy of the deposited body A may deteriorate, or the quality of the deposited body may deteriorate. On the other hand, the three-dimensional deposition device 1 according to the present embodiment detects a state in which the dimensional accuracy may deteriorate due to heat sagging by control of the control device 38, and in that case, the deposited body A is cooled, so that deterioration of the dimensional accuracy is suppressed.

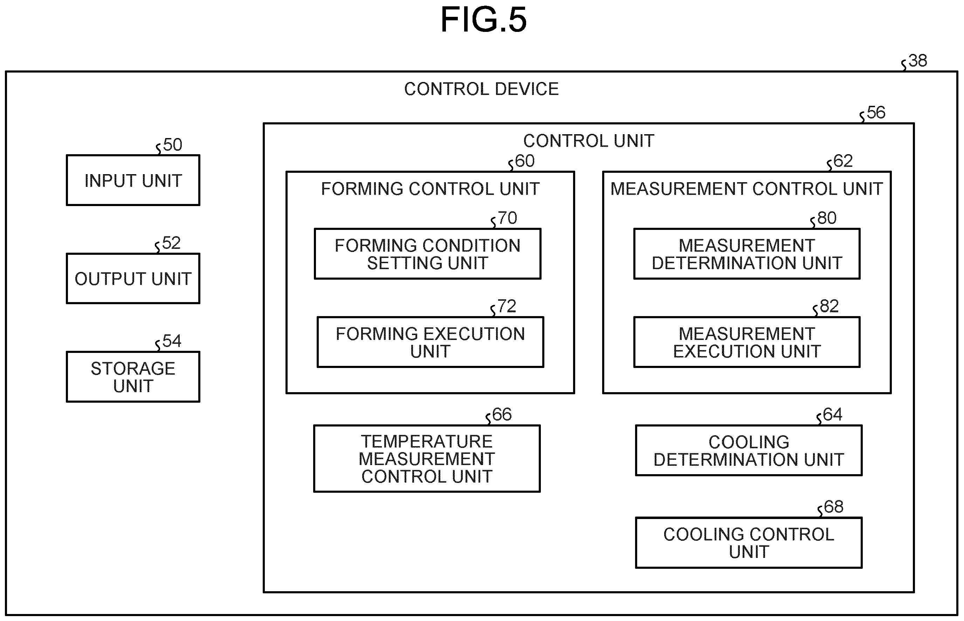

The control device 38 is a device that controls the three-dimensional deposition device 1, in this case, a computer. FIG. 5 is a block diagram of the control device according to the present embodiment. As illustrated in FIG. 5, the control device 38 includes an input unit 50, an output unit 52, a storage unit 54, and a control unit 56. The input unit 50 is an input device that accepts user operations. The output unit 52 is a display device that displays control contents of the control unit 56, and the like. The storage unit 54 is a memory that stores calculation contents of the control unit 56, computer program information, and the like, and includes, for example, at least one of external storage devices such as random-access memory (RAM), read-only memory (ROM), and a hard disk drive (HDD). The control unit 56 is an arithmetic device, that is, a central processing unit (CPU) .

The storage unit 54 stores forming conditions of the deposited body A. The forming conditions are operating conditions of the three-dimensional deposition device 1 configured to form the deposited body A, that is, a recipe. The forming conditions are set based on information on what kind of deposited body A is to be produced. Examples of the forming conditions include a deposition path, a laser output, a feed rate, a focal position, a beam diameter, a powder P supply rate, a powder P carrier gas flow rate, a powder P material, an inner gas flow rate, an outer gas flow rate, the overlap amount between beads, and the like. For example, the deposition path refers to a path of the bead B, such as along what direction the bead B is formed and how the bead B is deposited. In addition, for example, the laser output is an output of the light beam L, and the feed rate is a scanning velocity during deposition, in other words, a moving velocity of the base unit 14 with respect to the deposition head 18. Furthermore, for example, the focal position is a position where the light beam L and the powder P converge, the powder P supply rate is a jetting velocity of the powder P jetted from the deposition head 18, the powder P carrier gas flow rate is a flow rate of the carrier gas for flowing the powder P, the flow rates of the inner gas and outer gas are a flow rate of an inert gas supplied to cover the outer periphery of the position where the powder P and the light beam L are supplied, and the overlap amount between the beads is a length at which the bead B and a bead adjacent to the bead B overlap. However, the forming conditions are not limited thereto.

The control unit 56 includes a forming control unit 60, a measurement control unit 62, a cooling determination unit 64, a temperature measurement control unit 66, and a cooling control unit 68. The forming control unit 60, the measurement control unit 62, the cooling determination unit 64, the temperature measurement control unit 66, and the cooling control unit 68 are implemented by the control unit 56 reading out software (computer program) that is stored in the storage unit 54, and execute processing described later.

The forming control unit 60 controls forming of the deposited body A. The forming control unit 60 includes a forming condition setting unit 70 and a forming execution unit 72. The forming condition setting unit 70 sets the forming conditions of the deposited body A to be formed. The forming conditions are set based on, for example, design information of the deposited body A. The design information of the deposited body A is shape information on the deposited body A to be produced, such as a CAD model, material information on the deposited body A, or the like. The forming condition setting unit 70 may set the forming conditions based on the design information on the deposited body A, or may read out the set forming conditions stored in the storage unit 54 and set the read out forming conditions as the forming conditions of the deposited body A.

The forming execution unit 72 executes forming of the deposited body A by controlling the three-dimensional deposition device 1 under the forming conditions set by the forming condition setting unit 70. The forming execution unit 72 controls the base movement unit 12 to move the base unit 14, controls the deposition head 18 and the like to allow the powder P to be jetted from the deposition head 18 while the light beam L is emitted, and forms the deposited body A. In the example of the present embodiment, the forming execution unit 72 forms the bead B by causing the deposition head 18 to emit the light beam L and jet the powder P while the base unit 14 is moved based on the deposition path. After one bead B is formed, the forming execution unit 72 continues to form the next bead B. For example, the forming execution unit 72 forms a formed body by forming one or more beads B on the same surface. The forming execution unit 72 further forms a formed body on the formed body, that is, on a surface of the formed body on the direction Z1 side, so that the formed bodies are deposited, and the deposited body A is formed. That is, it can be said that the deposited body A is obtained by the formed bodies being deposited. In the present embodiment, a direction in which the formed bodies are deposited, that is, a deposition direction is the direction Z. Therefore, in the present embodiment, it can be said that the height D of the deposited body A is a length of the deposited body A in the deposition direction.

Furthermore, the forming execution unit 72 executes various types of controls for forming the deposited body A, such as controlling the head movement unit 22 to move the deposition head 18 in the direction Z, controlling the light source unit 32 to control the output of the light beam L, controlling the powder supply unit 34 to control the type and flow rate of the powder P, controlling the carrier gas and the cooling water supply unit 36, and controlling the flow rates of the inner gas and outer gas.

The measurement control unit 62 controls the shape measurement unit 26, and causes the shape measurement unit 26 to measure the shape of the deposited body A, in this case, the height D. The shape measurement unit 26 can also be controlled by a user operating the input unit 50. That is, the user may manually control a measurement position of the shape measurement unit 26 or the like and may cause the shape measurement unit 26 to measure the height D of the deposited body A.

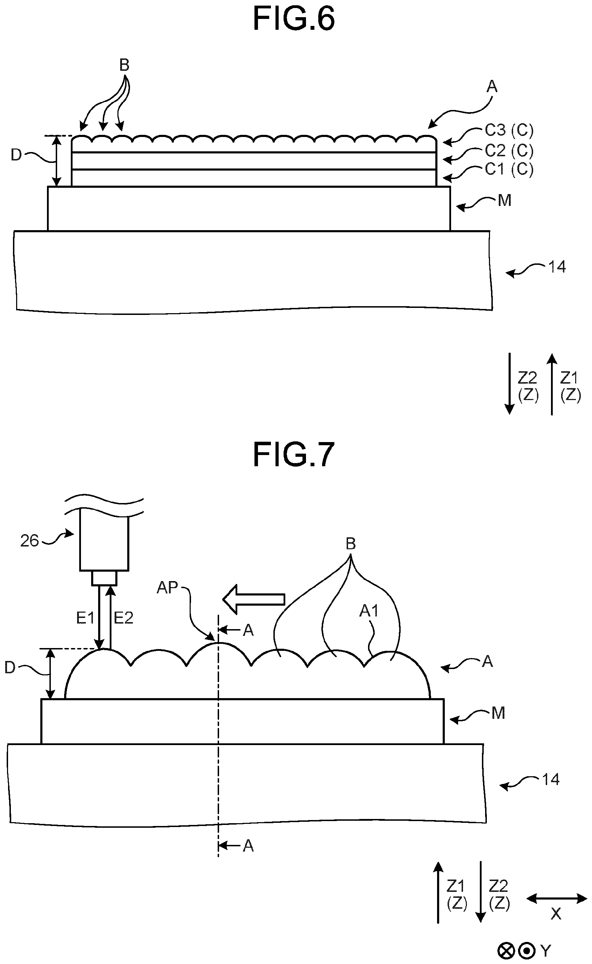

The measurement control unit 62 includes a measurement determination unit 80 and a measurement execution unit 82. The measurement determination unit 80 determines whether to measure the shape of the deposited body A based on the number of times of deposition of the formed body by the deposition head 18. FIG. 6 is a schematic diagram illustrating the number of times of deposition. As described above, the deposited body A is formed such that the formed body formed of one or more beads B is deposited along the direction Z. The number of times of deposition is the number of formed bodies that overlap along the deposition direction (here, the direction Z), that is, the number of times of deposition of the formed body. In an example of FIG. 6, because a formed body C2 is deposited on the direction Z1 side of a formed body C1 and a formed body C3 is deposited on the direction Z1 side of the formed body C2, the number of times of deposition in this case is three. Hereinafter, in a case in which the formed bodies are not distinguished from each other, the formed bodies are referred to as a formed body C.

The measurement determination unit 80 acquires the number of times of deposition from the forming execution unit 72. That is, the forming execution unit 72 counts the number of times of deposition of the formed body C while causing the deposition head 18 to execute forming of the deposited body A. The measurement determination unit 80 acquires information on the number of times of deposition counted by the forming execution unit 72. The measurement determination unit 80 determines whether the acquired number of times of deposition has reached a predetermined reference number of times of deposition. The reference number of times of deposition may be set by the measurement determination unit 80 based on deposition conditions such as a material of the powder P and the output of the light beam L, for example. The measurement determination unit 80 may acquire information on the reference number of times of deposition that is preset and stored in the storage unit 54. The measurement determination unit 80 determines that the shape measurement of the deposited body A is executed in a case in which the number of times of deposition has reached the reference number of times of deposition, that is, in a case in which the current number of times of deposition is equal to or greater than the reference number of times of deposition.

In the case in which the measurement determination unit 80 determines to execute the shape measurement of the deposited body A, the measurement execution unit 82 causes the shape measurement unit 26 to measure the shape of the deposited body A, here, the height D of the deposited body A. That is, the measurement execution unit 82 causes the shape measurement unit 26 to measure the height D of the deposited body A when the number of times of deposition reaches the reference number of times of deposition. For example, in a case in which the reference number of times of deposition is three, the measurement execution unit 82 causes the shape measurement unit 26 to measure the height D of the deposited body A when the number of times of deposition reaches three. In the present embodiment, the measurement control unit 62 calculates the height D based on measurement data obtained by the shape measurement unit 26 (for example, the data of the image-formation position of the reflected light E2), but the shape measurement unit 26 may measure the height D based on the measurement data (for example, the data of the image-formation position of the reflected light E2), and the measurement control unit 62 may acquire information on the height D calculated by the shape measurement unit 26.

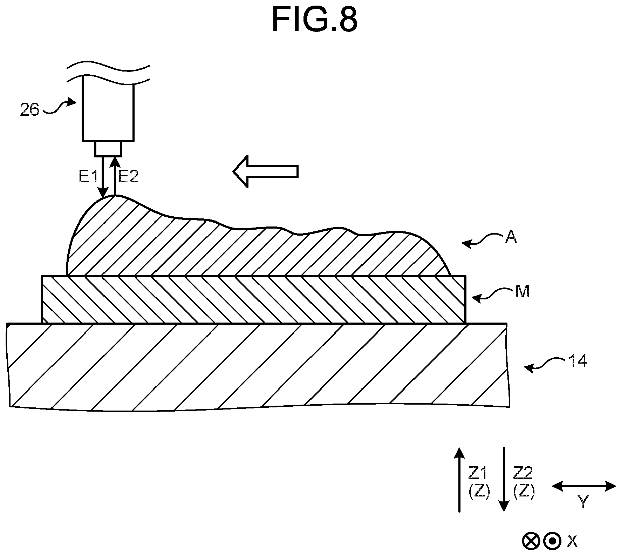

FIGS. 7 and 8 are diagrams illustrating examples of a method for measuring the height of the deposited body. In the present embodiment, the measurement execution unit 82 causes the shape measurement unit 26 to measure the height D of the deposited body as follows. That is, in the case in which the measurement determination unit 80 determines to execute the shape measurement of the deposited body A, the measurement execution unit 82 causes the shape measurement unit 26 to measure the height D of the deposited body A along the width direction of the beads B. The width direction of the beads B is a direction intersecting the longitudinal direction of the beads B, and furthermore, a direction orthogonal to the longitudinal direction and the deposition direction of the beads B. In addition, it can be said that the longitudinal direction of the beads B is a direction in which the base unit 14 moves relative to the deposition head 18 during forming of the beads B. The measurement execution unit 82 causes the shape measurement unit 26 to irradiate the surface A1 of the deposited body A with the measurement light E1 and to receive the reflected light E2 while causing the base movement unit 12 to move the base unit 14 along the width direction of the beads B. As a result, the shape measurement unit 26 measures the heights D of the deposited body A at each position along the width direction of the beads B. The measurement execution unit 82 measures the heights D of the deposited body A from one end to the other end of the deposited body A in the width direction of the beads B. FIG. 7 illustrates an example in which the longitudinal direction of the beads B is along the direction Y and the width direction of the beads B is along the direction X. In the example of FIG. 7, the measurement execution unit 82 causes the shape measurement unit 26 to irradiate the surface A1 of the deposited body A with the measurement light E1 and to receive the reflected light E2 while the base unit 14 on which the deposited body A is deposited is moved along the direction X. Therefore, in the example of FIG. 7, the shape measurement unit 26 measures the heights D of the deposited body A at each position along the direction X.

When the height D of the deposited body A is measured along the width direction of the beads B, the measurement execution unit 82 may move relative positions of the shape measurement unit 26 and the deposited body A in the width direction of the beads B, but may fix the relative positions of the shape measurement unit 26 and the deposited body A in the longitudinal direction of the beads B. In other words, the measurement execution unit 82 may move the irradiation position of the surface A1 of the deposited body A with the measurement light E1 in the width direction of the beads B, but may fix the position in the longitudinal direction of the beads B. The irradiation position of the surface A1 of the deposited body A with the measurement light E1 in the longitudinal direction of the beads B is optional, but may be, for example, the start point position of a bead B. Because the beads B are formed from the start point position to the end point position of a bead B along the longitudinal direction of the beads B, it can be said that the start point position of a bead B is a position where forming of the beads B is started in the longitudinal direction of the beads B. The bead B tends to be higher at the start point position. Therefore, the height D of the deposited body A can be appropriately measured such that the irradiation position with the measurement light E1 is moved along the width direction of the beads B while the start point position of a bead B in the longitudinal direction of the beads B is irradiated with the measurement light E1. The irradiation position with the measurement light E1 may be rephrased as a position on the surface A1 of the deposited body A the height D of which is measured by the shape measurement unit 26.

The measurement execution unit 82 acquires a measurement result of the heights D of the deposited body A along the width direction of the beads B, that is, a measurement result of the heights D of the deposited body A at each position along the width direction of the beads B. The measurement execution unit 82 compares the heights D of the deposited body A at each position along the width direction of the beads B with each other, and detects the maximum height position. The maximum height position refers to a position where the height D of the deposited body A is maximized among the positions along the width direction of the beads B. In the example of FIG. 7, the height D at a position AP among the heights D of the positions in the width direction of the beads B (here, the direction X) is maximized, so that the maximum height position is the position AP.

After detecting the maximum height position, the measurement execution unit 82 causes the shape measurement unit 26 to measure the height D of the deposited body A along the longitudinal direction of the beads B from the maximum height position. While the irradiation position (the measurement position of the height D) with the measurement light E1 in the width direction of the beads B is fixed to the maximum height position, the measurement execution unit 82 causes the shape measurement unit 26 to irradiate the surface A1 of the deposited body A with the measurement light E1 and to receive the reflected light E2 while causing the base movement unit 12 to move the base unit 14 along the longitudinal direction of the beads B. According to this, the shape measurement unit 26 measures the height D of the deposited body A at each position along the longitudinal direction of the beads B from the maximum height position. At the maximum height position in the width direction of the beads B, the measurement execution unit 82 measures the heights D of the deposited body A from one end to the other end of the deposited body A in the longitudinal direction of the beads B. FIG. 8 illustrates a cross-section of A-A in FIG. 7, that is, a cross-section of the deposited body A at the maximum height position in the direction X (the width direction of the beads B). In an example of FIG. 8, at the maximum height position in the direction X (the width direction of the beads B), the measurement execution unit 82 causes the shape measurement unit 26 to irradiate the surface A1 of the deposited body A with the measurement light E1 and to receive the reflected light E2 while the base unit 14 on which the deposited body A is deposited is moved along the direction Y. Therefore, in the example of FIG. 7, at the maximum height position in the direction X (the width direction of the beads B), the shape measurement unit 26 measures the height D of the deposited body A at each position along the direction Y.

The measurement execution unit 82 acquires a measurement result of the height D of the deposited body A along the longitudinal direction of the beads B at the maximum height position in the width direction of the beads B, that is, a measurement result of the height D of the deposited body A at each position along the longitudinal direction of the beads B. The measurement execution unit 82 calculates the height DO of the deposited body A to be used for determining the necessity of cooling based on the measurement result of the height D of the deposited body A at each position along the longitudinal direction of the beads B. The measurement execution unit 82 may set the maximum value of the heights D of the deposited body A at each position along the longitudinal direction of the beads B to the height D0, or set an average value of the heights D of the deposited body A at each position along the longitudinal direction of the beads B to the height D0.

As described above, the measurement execution unit 82 causes the shape measurement unit 26 to measure the height D of the deposited body A, and based on the height D, the height DO of the deposited body A to be used for determining the necessity of cooling is calculated. However, the method of measuring the height D of the deposited body A by the shape measurement unit 26 is not limited to the above method and is optional. For example, the measurement execution unit 82 may cause the shape measurement unit 26 to measure the height D of the deposited body A at a predetermined one position of the deposited body A, and set the height D of the deposited body A at the one position to the height DO of the deposited body A to be used for determining the necessity of cooling.

Returning to FIG. 5, the cooling determination unit 64 determines whether to cool the deposited body A based on the shape of the deposited body A measured by the shape measurement unit 26 under the control of the measurement execution unit 82, here, the height DO of the deposited body A. In the present embodiment, the cooling determination unit 64 determines to cool the deposited body A in a case in which a difference between the height DO and a preset reference height is equal to or greater than a predetermined value. On the other hand, the cooling determination unit 64 determines not to cool the deposited body A in a case in which the difference between the height DO and the preset reference height is smaller than a predetermined value. The reference height is the expected height of the deposited body A when forming has proceeded to the time at which the shape measurement unit 26 measures the height. For example, in a case in which the height is measured at the time when the formed body C is deposited in three layers, the reference height is the expected height of the deposited body A in a case in which the formed body C is deposited in three layers. The cooling determination unit 64 sets the reference height based on, for example, the design information of the deposited body A (for example, information on the shape of a CAD model of the deposited body A). The cooling determination unit 64 may set the reference height based on the deposition conditions such as the deposition path, the material of the powder P, and the output of the light beam L, for example. The cooling determination unit 64 may acquire information on the reference height that is preset and stored in the storage unit 54.

In a case in which the difference between the height of the deposited body A and the reference height is equal to or greater than the predetermined value, heat sagging may occur, and the dimensional accuracy of the deposited body A may deteriorate, so that the cooling determination unit 64 determines to stop the forming of the deposited body A and cool the deposited body A. On the other hand, in a case in which the difference between the height of the deposited body A and the reference height is smaller than the predetermined value, the influence of heat sagging is small, and the dimensional accuracy of the deposited body A may be less likely to deteriorate at this point in time, so that the cooling determination unit 64 continues the forming of the deposited body A.

The temperature measurement control unit 66 controls the temperature measurement unit 28 and causes the temperature measurement unit 28 to measure the temperature of the deposited body A. The temperature measurement control unit 66 causes the temperature measurement unit 28 to measure the temperature of the deposited body A, triggered by the fact that the cooling determination unit 64 determines to cool the deposited body A. The temperature measurement control unit 66 acquires a measurement result of the temperature of the deposited body A, which is obtained by the temperature measurement unit 28, and outputs the measurement result to the cooling control unit 68 described later. The temperature measurement control unit 66 causes the temperature measurement unit 28 to continuously measure the temperature of the deposited body A while the cooling control unit 68 causes the deposited body cooling unit 30 to cool the deposited body A. The temperature measurement control unit 66 may cause the temperature measurement unit 28 to measure the temperature of the deposited body A even in a case in which the cooling determination unit 64 has not determined to cool the deposited body A, and may cause the temperature measurement unit 28 to measure the temperature of the deposited body A while the deposited body A is not cooled by the deposited body cooling unit 30. For example, the temperature measurement control unit 66 may cause the temperature measurement unit 28 to measure the temperature of the deposited body A while the deposited body A is formed by the deposition head 18.

The cooling control unit 68 acquires a determination result of whether the deposited body A needs to be cooled obtained by the cooling determination unit 64. The cooling control unit 68 causes the deposited body cooling unit 30 to cool the deposited body A in a case in which the cooling determination unit 64 determines to cool the deposited body A. On the other hand, the cooling control unit 68 causes the deposited body cooling unit 30 to cool the deposited body A in a case in which the cooling determination unit 64 determines not to cool the deposited body A. The cooling control unit 68 may cause the base cooling unit 24D to supply the cooling water W to continuously cool the base unit 14 regardless of the determination result of whether the deposited body A needs to be cooled by the cooling determination unit 64. That is, in the present embodiment, when the deposited body A is formed by the deposition head 18, the cooling control unit 68 causes the base cooling unit 24D to supply the cooling water W, and the base unit 14 is cooled. However, the cooling control unit 68 causes the deposited body cooling unit 30 not to jet the cooling gas G, and thus the deposited body A is not cooled by the deposited body cooling unit 30. On the other hand, in the case in which the cooling determination unit 64 determines to cool the deposited body A, the cooling control unit 68 causes the deposited body cooling unit 30 to jet the cooling gas G while causing the base cooling unit 24D to continuously supply the cooling water W to cool the base unit 14, and the deposited body A is cooled obtained by the deposited body cooling unit 30.

As described above, the temperature measurement control unit 66 causes the temperature measurement unit 28 to measure the temperature of the deposited body A while the deposited body cooling unit 30 cools the deposited body A. The cooling control unit 68 acquires a measurement result of the temperature of the deposited body A obtained by the temperature measurement unit 28, and determines whether the temperature of the deposited body A is equal to or lower than a reference temperature. In a case in which the temperature of the deposited body A is higher than the reference temperature, the cooling control unit 68 causes the deposited body cooling unit 30 to continuously cool the deposited body A. In a case in which the temperature of the deposited body A is equal to or lower than the reference temperature, the cooling control unit 68 causes the deposited body cooling unit 30 to stop cooling of the deposited body A. The reference temperature may be set by the cooling control unit 68 based on the deposition conditions such as a material of the powder P and the output of the light beam L, for example. The cooling control unit 68 may acquire information on the reference temperature that is preset and stored in the storage unit 54.

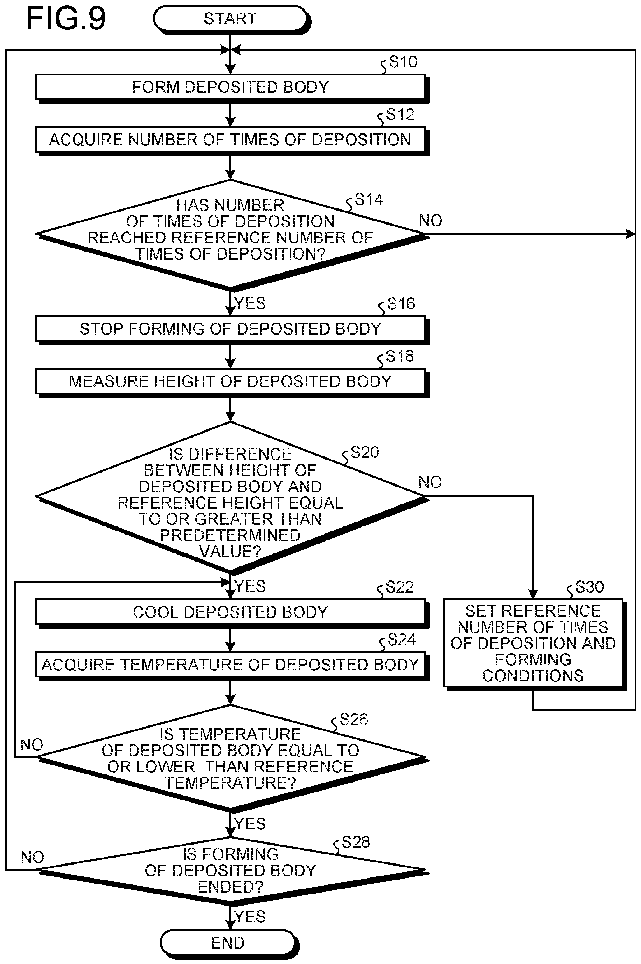

The control device 38 is configured as described above. Next, a step of forming the deposited body A by the control device 38 will be described with a flowchart. FIG. 9 is a flowchart illustrating a step of depositing the deposited body according to the present embodiment. As illustrated in FIG. 9, the control device 38 causes the forming control unit 60 to control the deposition head 18 and the like to form the deposited body A based on the forming conditions (step S10). The control device 38 causes the measurement determination unit 80 to acquire the number of times of deposition of the formed body C (step S12) and determine whether the number of times of deposition of the formed body C has reached the reference number of times of deposition (step S14). For example, the measurement determination unit 80 acquires the number of times of deposition every time one layer of the formed body C is formed by the forming control unit 60. In a case in which the number of times of deposition has not reached the reference number of times of deposition (No at step S14), that is, in a case in which the number of times of deposition is smaller than the reference number of times of deposition, the measurement determination unit 80 determines that the measurement of the height D of the deposited body A is unnecessary, the process returns to the step S10, and the forming of the deposited body A is continued until the number of times of deposition reaches the reference number of times of deposition.

In a case in which the number of times of deposition has reached the reference number of times of deposition (Yes at step S14), the measurement determination unit 80 causes the forming control unit 60 to stop the forming of the deposited body A (step S16), and the measurement execution unit 82 causes the shape measurement unit 26 to measure the height of the deposited body A (step S18). Here, the shape measurement unit 26 measures the height D of the deposited body A before completion, that is, during the forming. In the present embodiment, the measurement execution unit 82 detects the maximum height position by measuring the height D of the deposited body A along the width direction of the beads B. In addition, the measurement execution unit 82 calculates the height DO of the deposited body A used to determine the necessity of the cooling by measuring the height D of the deposited body A along the longitudinal direction of the beads B from the maximum height position.

The cooling determination unit 64 compares the height of the deposited body A with the reference height, and determines whether the difference value between the height of the deposited body A and the reference height is equal to or greater than a predetermined value (step S20). In the present embodiment, the cooling determination unit 64 determines whether the difference value between the height DO of the deposited body A and the reference height is equal to or greater than a predetermined value. The cooling determination unit 64 determines whether to cool the deposited body A every time the shape measurement unit 26 measures the height D of the deposited body A, in other words, every time the number of times of deposition reaches the reference number of times of deposition.

In a case in which the difference is equal to or greater than the predetermined value (Yes at step S20), the cooling control unit 68 causes the deposited body cooling unit 30 to cool the deposited body A (step S22). In a case in which the cooling determination unit 64 determines to cool the deposited body A, the temperature measurement control unit 66 causes the temperature measurement unit 28 to measure the temperature of the deposited body A, and the cooling control unit 68 acquires the measurement result of the temperature of the deposited body A (step S24). In a case in which the temperature of the deposited body A is not equal to or lower than the reference temperature (No at step S26), that is, in a case in which the temperature of the deposited body A is higher than the reference temperature, the process returns to the step S22, and the deposited body cooling unit 30 continuously cools the deposited body A until the temperature of the deposited body A becomes equal to or lower than the reference temperature. On the other hand, in a case in which the temperature of the deposited body A is equal to or lower than the reference temperature (Yes at step S26), the cooling of the deposited body A by the deposited body cooling unit 30 ends; in a case in which the forming of the deposited body A ends (Yes at step S28), this process ends; in a case in which the forming of the deposited body A is not ended (No at step S28), the process returns to the step S10; and the forming of the deposited body A by the forming control unit 60 is restarted. That is, the forming control unit 60 stops the forming of the deposited body A during a period from when the number of times of deposition reaches the reference number of times of deposition and the cooling determination unit 64 determines to cool the deposited body A to when the cooling of the deposited body A ends. This process also ends in a case in which the forming of the deposited body A ends due to completion of the deposited body A and the like during the execution of the step S10.

On the other hand, in a case in which the difference is smaller than the predetermined value at the step S20 (No at step S20), the control device 38 sets the reference number of times of deposition and the forming conditions (step S30), the process returns to the step S10, and the deposited body A is continuously formed. That is, the control device 38 stops the forming of the deposited body A during a period from when the number of times of deposition reaches the reference number of times of deposition to when the cooling determination unit 64 determines not to cool the deposited body A. At the step S30, the measurement determination unit 80 resets the reference number of times of deposition with respect to the reference number of times of deposition used for determining the necessity of the height measurement of the deposited body A so far. The measurement determination unit 80 may set the reset reference number of times of deposition to a value smaller than the previous reference number of times of deposition. That is, even in a case in which the difference between the height of the deposited body A and the reference height is within the predetermined value and cooling is not required at this point in time, the measurement determination unit 80 determines that deposition has already been performed up to the reference number of times of deposition at least once and the temperature is high, and the reference number of times of deposition is reset to a lower value to increase the frequency of determining the necessity of the cooling. In a case of returning to the step S10 and restarting the forming of the deposited body A, the counting of the number of times of deposition may be restarted from the beginning. That is, for example, in a case in which after deposition of five layers is performed to reach the reference number of times of deposition, the process returns to the step S10, and the forming of the deposited body A is restarted, the number of times of deposition when one layer is next deposited may be one instead of six.

The measurement determination unit 80 may reset the reference number of times of deposition based on the measurement result of the height D of the deposited body A obtained by the shape measurement unit 26. For example, the measurement determination unit 80 sets the reference number of times of deposition based on the difference value between the height of the deposited body A and the reference height, and furthermore, the larger the difference value, the smaller the reference number of times of deposition to be reset. That is, even in a case in which the cooling is not required at this point in time, it is observed that there is a tendency of occurring heat sagging in a case in which a certain difference between the height of the deposited body A and the reference height exists. Therefore, the reference number of times of deposition is reset to a lower value to increase the frequency of determining the necessity of the cooling. However, the measurement determination unit 80 may not reset the reference number of times of deposition, and may set the reference number of times of deposition used for determining the necessity of the height measurement of the deposited body A so far to a reference number of times of deposition used for determining the necessity of a next height measurement of the deposited body A, as it is. In a case in which the number of times of deposition reached the reset reference number of times of deposition at the step S14 after the reference number of times of deposition was reset through the step S30, the measurement determination unit 80 may not measure the height D of the deposited body A, the process may proceed to the step S22, and the deposited body A may be cooled. That is, in this case, since the deposition step is repeated multiple times (here, twice) until the number of times of deposition reaches the reference number of times of deposition, and it is predicted that the temperature of the deposited body A is high, the process may proceed to the step S22 regardless of the height D, and the deposited body A may be cooled.

At the step S30, the forming condition setting unit 70 of the forming control unit 60 resets the forming conditions for the forming conditions used for forming the deposited body A so far. The forming condition setting unit 70 resets the forming conditions based on the measurement result of the height D of the deposited body A, which is obtained by the shape measurement unit 26, and the measurement result of the temperature of the deposited body A, which is obtained by the temperature measurement unit 28. For example, the forming condition setting unit 70 increases the powder P supply rate or slows down the feed rate at a position where the height D is low, as compared with a position where the height D is higher than the position. For example, the forming condition setting unit 70 acquires a table illustrating a correlation between the temperature distribution for each position of the deposited body and the quality of the deposited body. In a case in which the quality of the deposited body in the temperature distribution for each position of the deposited body A measured by the temperature measurement unit 28 may be equal to or lower than the reference value in the table, the forming condition setting unit 70 resets the forming conditions so that the quality of the deposited body is improved (for example, the temperature of the deposited body A is lowered). For example, the forming condition setting unit 70 decreases the laser output or the like, so that the temperature of the deposited body A does not become too high. However, the forming condition setting unit 70 may not reset the forming conditions, and may use the forming conditions used for forming the deposited body A so far, as it is.

As described above, the three-dimensional deposition device 1 according to the present embodiment includes the deposition head 18, the shape measurement unit 26, the deposited body cooling unit 30, and the control unit 56. The deposition head 18 is provided with the powder jetting port 44B from which the powder P is jetted and the light beam irradiation port 42B from which the light beam L is emitted to form the deposited body A by the powder P being melted and solidified. The shape measurement unit 26 measures the shape of the deposited body A. The deposited body cooling unit 30 cools the deposited body A. The control unit 56 includes the measurement control unit 62, the cooling determination unit 64, and the cooling control unit 68. The measurement control unit 62 causes the shape measurement unit 26 to measure the shape of the deposited body A. The cooling determination unit 64 determines whether to cool the deposited body A based on the shape of the deposited body A measured by the shape measurement unit 26. The cooling control unit 68 causes the deposited body cooling unit 30 to cool the deposited body A in a case in which the cooling determination unit 64 determines to cool the deposited body A.

Since the deposited body A is formed of the bead B by the molten powder P being solidified, the temperature thereof is increased to cause what is called heat sagging. Thus, the height may be lower than expected, and as a result, the dimensional accuracy may deteriorate. Therefore, in order to suppress the deterioration of the dimensional accuracy due to heat sagging, the deposited body A may be cooled during forming of the deposited body A. However, in a case in which the timing of cooling the deposited body is inappropriate, the deposited body may not be appropriately formed. On the other hand, the three-dimensional deposition device 1 according to the present embodiment measures the shape of the deposited body A and determines whether to cool the deposited body A based on the measured shape of the deposited body A. For example, it is conceivable to use the temperature measurement result at a timing when the deposited body A is cooled, but it is difficult to set the temperature at which the deposited body A needs to be cooled, that is, the temperature at which the influence of heat sagging is large. Thus, there is a possibility that the timing of cooling the deposited body A cannot be set appropriately. On the other hand, since the three-dimensional deposition device 1 according to the present embodiment determines whether to cool the deposited body A based on the shape of the deposited body A, the timing of cooling the deposited body A can be appropriately set, and the deposited body A can be appropriately formed.

The shape measurement unit 26 measures the height D of the deposited body A as the shape of the deposited body A. Since the three-dimensional deposition device 1 according to the present embodiment determines whether to cool the deposited body A based on the height D of the deposited body A, the timing of cooling the deposited body A can be appropriately set, and the deposited body A can be appropriately formed. In a case in which heat sagging occurs, the height of the deposited body A is lower than expected. Therefore, the cooling timing can be appropriately set in consideration of the influence of heat sagging by measuring the height D.

The shape measurement unit 26 is not limited to a unit that measures the height D of the deposited body A as the shape of the deposited body A. For example, the shape measurement unit 26 may measure the length of the deposited body A in the width direction of the bead B instead of the height D of the deposited body A. As illustrated in FIG. 2, in the case in which heat sagging occurs, the length of the bead B in the width direction (the length along the direction X in FIG. 2) is longer. Therefore, it is possible to determine whether to cool the deposited body A in consideration of the influence of heat sagging by measuring the length of the deposited body A in the width direction of the bead B instead of the height D.

The cooling determination unit 64 determines to cool the deposited body A in the case in which the difference between the height of the deposited body A measured by the shape measurement unit 26 and the preset reference height is equal to or greater than a predetermined value. Since this three-dimensional deposition device 1 determines to cool the deposited body A in the case in which the difference between the height of the deposited body A and the reference height is equal to or greater than the predetermined value, the timing of cooling the deposited body A can be determined appropriately in consideration of the influence of heat sagging.

The measurement control unit 62 causes the shape measurement unit 26 to measure the height D of the deposited body A in the case in which the number of times of deposition made by the deposition head 18 has reached a predetermined reference number of times of deposition, and the cooling determination unit 64 determines whether to cool the deposited body A. The three-dimensional deposition device 1 measures the height of the deposited body A and determines whether the deposited body A needs to be cooled, triggered by the fact that the number of times of deposition has reached the reference number of times of deposition. Therefore, according to this three-dimensional deposition device 1, the timing of cooling the deposited body A can be appropriately determined.

The measurement control unit 62 causes the shape measurement unit 26 to measure the height D of the deposited body A along the width direction of the beads B formed by the deposition head 18 and detects the maximum height position. The maximum height position is a position in the width direction of the bead B at which the height D of the deposited body A is maximum. The measurement control unit 62 causes the shape measurement unit 26 to measure the height of the deposited body A along the longitudinal direction of the beads B from the maximum height position. According to the three-dimensional deposition device 1, since the height D of the deposited body A is measured in this way, the cooling timing can be appropriately determined based on the measured height D.

The cooling determination unit 64 determines whether to cool the deposited body A based on the maximum height (maximum value) or the average height (average value) among the measurement results of the heights D of the deposited body A along the longitudinal direction of the beads B from the maximum height position, which are obtained by the shape measurement unit 26, that is, based on the calculated height DO of the deposited body A. According to the three-dimensional deposition device 1, it is possible to appropriately determine the cooling timing since whether the cooling is performed is determined based on the height of the deposited body A measured in this way.

The control unit 56 further includes the forming control unit 60 that controls forming of the deposited body A. The forming control unit 60 stops the forming of the deposited body A by the deposition head 18 during the period when the deposited body A is cooled by the deposited body cooling unit 30. In the case in which the deposited body A is cooled by, for example, the cooling gas G while forming of the deposited body A is performed by the deposition head 18, the flow direction of the jetted powder P may change, or the shape of the molten pool may be uneven, so that the forming may be influenced. On the other hand, according to the three-dimensional deposition device 1, since the forming of the deposited body A is stopped and cooled, the deposited body A can be appropriately cooled while the influence on the forming of the deposited body A is suppressed.

The three-dimensional deposition device 1 further includes the temperature measurement unit 28 that measures the temperature of the deposited body A. In the case in which the temperature of the deposited body A measured by the temperature measurement unit 28 becomes equal to or lower than a predetermined reference temperature, the cooling control unit 68 causes the deposited body cooling unit 30 to end the cooling of the deposited body A. According to this three-dimensional deposition device 1, since the cooling is stopped according to the temperature of the deposited body A, the forming of the deposited body A can be restarted at an appropriate timing, and the deposited body A can be appropriately formed.

The three-dimensional deposition device 1 further includes the base cooling unit 24D that supplies the cooling water W to the base unit 14 on which the deposited body A is formed, and the deposited body cooling unit 30 jets the cooling gas G to the deposited body A. The cooling control unit 68 causes the base cooling unit 24D to supply the cooling water W and causes the deposited body cooling unit 30 not to jet the cooling gas G, during forming by the deposition head 18. On the other hand, in the case in which the cooling determination unit 64 determines to cool the deposited body A, the cooling control unit 68 causes the deposited body cooling unit 30 to jet the cooling gas G while continuously causing the base cooling unit 24D to supply the cooling water W s. According to the three-dimensional deposition device 1, while the deposited body A is indirectly cooled by the base cooling unit 24D during forming of the deposited body A, in the case in which the cooling determination unit 64 determines to cool the deposited body A, the deposited body A is additionally directly cooled by the deposited body cooling unit 30. Therefore, according to the three-dimensional deposition device 1, the deposited body A may be appropriately cooled, and the deposited body A may be appropriately formed.

Although the embodiments of the present invention have been described above, the embodiments are not limited by the contents of the embodiments. In addition, the components described above include components that can be easily conceived by the skilled person in the art, components that are substantially the same, what is called equivalents, within the same range. Furthermore, the components described above can be combined as appropriate. Furthermore, various omissions, substitutions, or modifications of the components can be made without departing from the gist of the embodiments described above. Reference Signs List

- 1: three-dimensional deposition device
- 14: base unit
- 18: deposition head
- 24D: base cooling unit
- 26: shape measurement unit
- 28: temperature measurement unit
- 30: deposited body cooling unit
- 40: control device
- 42B: light beam irradiation port
- 44B: powder jetting port
- 56: control unit
- 60: forming control unit
- 62: measurement control unit
- 64: cooling determination unit
- 66: temperature measurement control unit
- 68: cooling control unit
- A: deposited body
- B: bead
- C: formed body
- L: light beam
- P: powder

## Claims

1. A three-dimensional deposition device comprising:
a deposition head provided with a powder jetting port from which powder is jetted and a light beam irradiation port from which a light beam is emitted to form a deposited body by the powder being melted and solidified;
a shape measurement unit that measures a shape of the deposited body;
a deposited body cooling unit that cools the deposited body; and
a control unit, wherein
the control unit includes
a measurement control unit that causes the shape measurement unit to measure the shape of the deposited body,
a cooling determination unit that determines whether to cool the deposited body based on the shape of the deposited body measured by the shape measurement unit, and
a cooling control unit that causes the deposited body cooling unit to cool the deposited body in a case in which the cooling determination unit determines to cool the deposited body.

2. The three-dimensional deposition device according to claim 1, wherein the shape measurement unit measures a height of the deposited body as the shape of the deposited body.

3. The three-dimensional deposition device according to claim 2, wherein the cooling determination unit determines to cool the deposited body in a case in which a difference between the height of the deposited body measured by the shape measurement unit and a preset reference height is equal to or greater than a predetermined value.

4. The three-dimensional deposition device according to claim 2 or 3, wherein
the measurement control unit causes the shape measurement unit to measure the height of the deposited body in a case in which the number of times of deposition performed by the deposition head reaches the predetermined reference number of times of deposition, and
the cooling determination unit determines whether to cool the deposited body.

5. The three-dimensional deposition device according to any one of claims 2 to 4, wherein
the measurement control unit
causes the shape measurement unit to measure the height of the deposited body along a width direction of beads formed by the deposition head to detect a maximum height position that is a position where the height of the deposited body is maximum in the width direction of the beads, and
causes the shape measurement unit to measure heights of the deposited body along a longitudinal direction of the beads from the maximum height position.

6. The three-dimensional deposition device according to claim 5, wherein
the cooling determination unit determines whether to cool the deposited body based on a maximum height or an average height among measurement results of the heights of the deposited body, which are measured along the longitudinal direction of the bead from the maximum height position by the shape measurement unit.

7. The three-dimensional deposition device according to any one of claims 1 to 6, wherein
the control unit further includes a forming control unit that controls forming of the deposited body, and
the forming control unit causes the deposition head to stop forming during a period when the cooling control unit cools the deposited body by the deposited body cooling unit.

8. The three-dimensional deposition device according to any one of claims 1 to 7, further comprising a temperature measurement unit that measures a temperature of the deposited body, wherein
the cooling control unit causes the deposited body cooling unit to end cooling of the deposited body in a case in which the temperature of the deposited body measured by the temperature measurement unit is equal to or lower than a predetermined reference temperature.

9. The three-dimensional deposition device according to any one of claims 1 to 8, further comprising a base cooling unit that supplies cooling water to a base unit on which the deposited body is formed, wherein
the deposited body cooling unit jets cooling gas to the deposited body,
the cooling control unit causes the base cooling unit to supply the cooling water and causes the deposited body cooling unit not to jet the cooling gas during forming by the deposition head, and
in a case in which the cooling determination unit determines to cool the deposited body, the cooling control unit causes the deposited body cooling unit to jet the cooling gas while continuing to supply the cooling water by the base cooling unit.

10. A three-dimensional deposition method performed by a three-dimensional deposition device including a deposition head provided with a powder jetting port from which powder is jetted and a light beam irradiation port from which a light beam is emitted to form a deposited body by the powder being melted and solidified, the method comprising:
a shape measurement step of measuring a shape of the deposited body;
a cooling determination step of determining whether to cool the deposited body based on the shape of the deposited body measured at the shape measurement step; and
a cooling step of cooling the deposited body in a case of determining to cool the deposited body at the cooling determination step.
